(19) Europäisches Patentamt
European Patent Office
Office européen des brevets

(11) **EP 3 669 060 B1**

(12) **EUROPEAN PATENT SPECIFICATION**

(45) Date of publication and mention
of the grant of the patent:
**27.10.2021 Bulletin 2021/43**

(51) Int Cl.:
*F02D 41/00* (2006.01)    *F02D 35/02* (2006.01)
*F02B 37/18* (2006.01)    *F02B 37/24* (2006.01)

(21) Application number: **17754172.9**

(22) Date of filing: **18.08.2017**

(86) International application number:
**PCT/EP2017/070939**

(87) International publication number:
**WO 2019/034260 (21.02.2019 Gazette 2019/08)**

(54) **A METHOD OF CONTROLLING COMBUSTION OF FUEL IN A MULTI-CYLINDER INTERNAL COMBUSTION ENGINE AND A COMPUTER CONTROL SYSTEM CONFIGURED TO CONTROL COMBUSTION PROCESS IN A MULTI-CYLINDER INTERNAL COMBUSTION PISTON ENGINE**

VERFAHREN ZUR STEUERUNG DER VERBRENNUNG VON KRAFTSTOFF IN EINEM MEHRZYLINDER-VERBRENNUNGSMOTOR UND RECHNERSTEUERUNGSSYSTEM ZUR STEUERUNG DES VERBRENNUNGSPROZESSES IN EINEM MEHRZYLINDER-KOLBENVERBRENNUNGSMOTOR

PROCÉDÉ DE COMMANDE DE COMBUSTION DE CARBURANT DANS UN MOTEUR À COMBUSTION INTERNE MULTICYLINDRE ET SYSTÈME DE COMMANDE INFORMATIQUE CONÇU POUR COMMANDER UN PROCESSUS DE COMBUSTION DANS UN MOTEUR À PISTON À COMBUSTION INTERNE MULTICYLINDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020 Bulletin 2020/26**

(73) Proprietor: **Wärtsilä Finland Oy**
**65100 Vaasa (FI)**

(72) Inventor: **KAAS, Tom**
**65380 Vaasa (FI)**

(74) Representative: **Genip Oy**
**Heikinkatu 7**
**48100 Kotka (FI)**

(56) References cited:
**EP-A1- 2 772 631          EP-A2- 2 375 034**
**JP-A- S6 229 748          US-A- 5 778 857**
**US-A1- 2008 178 843      US-A1- 2010 126 465**
**US-B1- 6 843 231**

## Description

### Technical field

The present invention relates to a method of controlling combustion of fuel in a multi-cylinder internal combustion engine according to the preamble of claim 1 and to a computer control system for a multi-cylinder internal combustion piston engine.

### Background art

The operational requirements of combustion engines are becoming more and more demanding. For example, exhaust gas emission requirements of internal combustion piston engines become more and more stringent. In order to cope with such requirements there are various techniques available by means of which the gaseous emissions may be controlled when the engine is running. On the other hand, it is not desirable that the overall performance of the engine will suffer resulted from actions aiming to reduce the emissions. One means of achieving these goals is to adjust the timing of the inlet valves with greater accuracy because the timing of the inlet valves plays significant role in the engine performance.

During combustion of fuel the amount of accessible air has great influence on how the fuel is burned. It would be highly desirable that a correct amount of air would be admitted to each cylinder and the operation and performance of each cylinder is in balance with each other. However, in practice there is almost always differences in cylinder operation such as different charge air pressures in different cylinders of the engine. Even the smallest differences in delays or advances in the operation of the variable inlet valve systems of cylinders may cause major pressure differences between the cylinders. Then the engine does not operate at its optimal efficiency and the fuel in the cylinder does not burn completely.

Publication WO2016/087700 discloses a method of controlling operation of an inlet valve system of each cylinder of an internal combustion piston engine based on cylinder pressure related variables. The method executes the following steps of measuring cylinder pressure in each cylinder at least at a one predetermined crank angle position, determining an estimated polytropic index for each cylinder corresponding to the at least one measured cylinder pressure at the predetermined crank angle position, determining an estimated compression pressure for at least at a second crank angle position by using the at least one measured cylinder pressure and the at least one estimated polytropic index, and controlling the operation of the variable inlet valve system arranged in connection with the cylinder by a response to the estimated compression pressure.

Document WO2017032915 discloses a method for controlling combustion in at least one cylinder of an internal combustion engine using gaseous fuel wherein an ignition timing is controlled by monitoring flywheel and by using ignition maps. The method further steps of monitoring pressure in at least one cylinder, forming an average heat release timing deduced from the monitoring of the pressure, comparing the average heat release timing with a nominal heat release timing, and make control decisions based on the timing of the average heat release.

Document WO 2014155170 A1 discloses a method in which a heat release rate waveform is utilized to determine a combustion state of fuel inside a cylinder of an internal combustion engine.

US 6 843 231 B1 relates to improving performance and emissions characteristics of internal combustion engines, particularly to engines using homogeneous charge compression ignition (HCCI) techniques, and problems relating to variations in combustion phasing between cylinders in HCCI engines. It discloses use of cylinder pressure sensors to sense pressure within each cylinder and they are used to monitor the pressure within cylinders for determination of the occurrence of combustion events, i.e., when a sharp rise in cylinder pressure indicates that combustion has occurred, and information such as pressure rise rate, magnitude and timing of combustion may be determined for use in controlling the operation of the engine.

JP S62 29748 A discloses a method according to which misfire cycle and partial combustion cycles are ruled out from a process of determining a number of normal combustion cycles and where an average heat release rate is calculated using the normal combustion cycles. The average heat release rate is used for controlling the engine.

Even if the prior art recognizes several methods of improving the operation of an internal combustion engine, there still exist a need of improving the efficiency, and reducing emissions in combustion process of fuel in a multi-cylinder internal combustion engine.

An object of the invention is to provide a method of operating an internal combustion engine which results in enhanced prospects of controlling the combustion process in an internal combustion piston engine.

### Disclosure of the Invention

Objects of the invention can be met substantially as is disclosed in the independent claims and in the other claims describing more details of different embodiments of the invention.

In the invention a method controlling the amount of air involved in the combustion process based on the estimated gross combustion rate is presented.

A method of controlling combustion of fuel in a multi-cylinder internal combustion engine comprises determining a cumulative heat release from combustion of fuel during successive combustion cycles in a cylinder of the engine, determining a mean gross heat release rate from combustion of fuel during successive combustion cycles in the cylinder of the engine and using the mean gross heat release rate as feedback to control the combustion in the cylinder of the engine.

According to an embodiment of the invention, in the method the pressure from each cylinder of the engine is measured substantially constantly or intermittently during combustion of fuel in a cylinder of the engine at determined crank angles within a crank angle range ($\vartheta_1$ - $\vartheta_2$), and determining a cumulative heat release from combustion of fuel over the crank angle range ($\vartheta_1$ - $\vartheta_2$) during which combustion of fuel is taken place in one combustion cycle in one cylinder of the engine and the cumulative heat release is determined using an equation

$$Q = \int_{\theta_1}^{\theta_2} \frac{dQ}{d\theta} \cdot d\theta = \int_{\vartheta_0}^{\vartheta_1} \left( \frac{\gamma}{\gamma - 1} \cdot p \cdot \frac{\mathrm{d}V}{\mathrm{d}\vartheta} + \frac{1}{\gamma - 1} \cdot V \cdot \frac{\mathrm{d}p}{\mathrm{d}\vartheta} \right) \mathrm{d}\vartheta$$

Next, the mean gross heat release rate is determined by providing a Least Square Regression Line to the cumulative heat release and defining a slope of the Least Square Regression Line which stands for or implies the mean gross heat release rate.

According to an embodiment of the invention the steps of determining a cumulative heat release and the mean gross heat release rate are practised in each one of the cylinders of the engine providing cylinder specific gross heat release values of successive combustion cycles of each one of the cylinders of the engine, and the cylinder specific gross heat release values are used as feedback to control combustion in each respective cylinder in cylinder specific manner. This provides extremely accurate cylinder wise combustion control of the engine.

According to an embodiment of the invention the steps of determining a cumulative heat release and the mean gross heat release rate are in each one of the cylinders of the engine providing cylinder specific gross heat release values of successive combustion cycles, and calculating a gross value of the cylinder specific gross heat release values, and using the gross value as a feedback to control combustion in the engine collective manner affecting on all of the cylinders simultaneously.

According to an embodiment of the invention the cylinder specific gross heat release values are used as feedback to control the operation of an inlet valve in each respective cylinder.

According to an embodiment of the invention the gross value is used as a feedback to control the operation of supercharger of the engine.

According to an embodiment of the invention the cylinder specific gross heat release values are used as feedback to control the operation of an inlet valve in each respective cylinder and simultaneously the gross value is used as a feedback to control the operation of supercharger of the engine.

A computer control system according to the invention is configured to control combustion process in a multi-cylinder internal combustion piston engine comprising: a number first control units dedicated for each cylinder of the engine, which are configured to calculate a cumulative heat release for each cylinder of the engine based on cylinder pressure measurements and engine crank angle information, each one of the first control unit comprises a computer program configured to determine the cumulative heat release using the equation

$$Q = \int_{\theta_1}^{\theta_2} \frac{dQ}{d\theta} \cdot d\theta = \int_{\vartheta_0}^{\vartheta_1} \left( \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta} \right) \mathrm{d}\vartheta \ ,$$

and a computer program configured to calculate the mean gross heat release rate of the combustion phase by providing a Least Square Regression Line and defining a slope of the Least Square Regression Line which stands for the mean gross heat release rate.

According to an embodiment of the invention the computer control system further comprises a number of second control units dedicated for each one of the cylinders of the engine which second control units comprise a computer program which is configured to provide a control set value as an output for an actuator variable inlet valve closing system of the engine.

According to an embodiment of the invention the computer control system further comprises a third control unit, which third control unit is configured to receive the cylinder specific mean gross heat release rate values of successive combustion cycles of each one of the cylinders of the engine, and to calculate an average value gross heat release value and to provide as its output a set value for the waste gate position control.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

**Brief Description of Drawings**

In the following, the invention will be described with reference to the accompanying exemplary, schematic drawings, in which

Figure 1 illustrates an internal combustion multi-cylinder piston engine and a computer control system according to an embodiment of the invention,

Figure 2 illustrates an example of the cumulative heat release according to an embodiment of the invention,

Figure 3 illustrates a trend graph of the mean gross heat release rate according to an embodiment of the invention,

Figure 4 illustrates an internal combustion multi-cylinder piston engine and a computer control system according to another embodiment of the invention, and

Figure 5 illustrates an internal combustion multi-cylinder piston engine and a computer control system according to another embodiment of the invention.

**Detailed Description of Drawings**

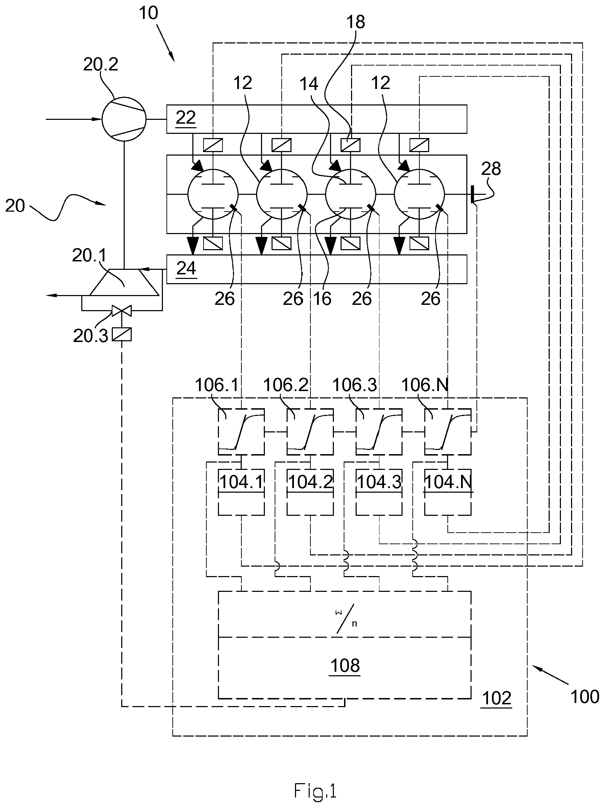

In the Figure 1 there is shown an internal combustion multi-cylinder piston engine 10 and a computer control system 100 configured to control combustion process in the engine 10. The internal combustion multi-cylinder piston engine 10 will be referred to as an engine 10 in the following for sake of simplicity. The engine 10 comprises a number of cylinders 12 which may be arranged in-line configuration as is shown in the figure or e.g. in V-configuration. Each one of the cylinders is provided with at least one inlet valve 14 and at least one exhaust valve 16, although typically there are more than one of each valve type. The valves are provided with so called valve lifting systems by means of which the valves may be opened and closed in synchronized manner with the position of the pistons in the engine. At least the inlet valves 14 of the engine 10 are provided with variable inlet valve closing system 18 by means of which the timing (in respect to the crank angle of the engine) of closing, or generally duration of open time, of each one of the inlet valves 14 can be individually controlled. This way e.g. the closing timing of the valve can be either advanced or retarded individually and separately during each cycle of the cylinder.

The engine is provided with a supercharger, advantageously a turbocharger 20 which is configured to be controllable. The turbocharger is provided with a turbine part 20.1 and a compressor part 20.2 and a waste gate 20.3 in connection with the turbine part for controlling the operation of the turbocharger in a manner known as such. The turbocharger 20 may in addition to or alternatively be provided with an inlet vane control in the compressor part 20.2 or the compressor part 20.2 may be of variable geometry type to facilitate the control of the operation. The turbocharger is connected to an air receiver 22 of the engine 10 and to an exhaust gas manifold 24 of the engine 10. Each one of the cylinders 12 of the engine 10 is provided with a pressure sensor 26. The pressure sensors 26 are arranged to provide pressure measurement data to the computer control system 100. The engine is also provided with one or more crank angle sensors 28 or other suitable arrangement, to provide crank shaft position information for use in the computer control system 100.

Generally, each one of any measurement device is in data transmission connection with the computer control system 100, for example by a data bus or fiber optics or a like. The measurement data from each one of the pressure sensors 26 is made available to the computer control system 100 for individual processing therein. The computer control system 100 comprises a computer 102 and an executable computer program or programs configured to control the combustion of fuel in the engine 10 to carry out the method according to the invention.

In the method of controlling combustion of fuel in a multi-cylinder internal combustion engine at least the following steps are executed:

- determining a cumulative heat release from combustion of fuel during successive combustion cycles in each cylinder of the engine,

- determining a mean gross heat release rate from combustion of fuel during successive combustion cycles in the cylinder of the engine,
- using the mean gross heat release rate as feedback to control the combustion in the cylinder of the engine.

Determining a cumulative heat release from combustion of fuel during successive combustion cycles in each cylinder of the engine is practised as follows. Advantageously the cumulative heat release is determined based on pressure measurement 26 from cylinders of the engine 10. The heat release can be determined based on the pressure and known dimensions of the cylinder and the position of the piston, which can be derived from the actual crank angle position 28.

A general formula for the heat release rate $\frac{\mathrm{d}Q}{\mathrm{d}\vartheta}$ in respect to a crank angle of an internal combustion piston engine is as follows

$$(1) \qquad \frac{\mathrm{d}Q}{\mathrm{d}\vartheta} = \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta},$$

where $\gamma$ is a heat capacity ratio $\frac{C_p}{C_V}$, $p$ is pressure, $V$ is volume of the cylinder, d$V$ is change of volume in the cylinder, d$\vartheta$ is change of a crank angle and d$p$ is change of pressure in the cylinder. For sake of clarity is should be mentioned that as a base unit of the heat release rate is J / crank angle degree.

Integrating the heat release rate equation (1) with respect to crank angle during which the combustion of fuel takes place in the cylinder, herein a range $\vartheta_0$ -> $\vartheta_1$, one obtains a cumulative heat release $Q$, that is

$$(2) \qquad Q = \int_{\theta_1}^{\theta_2} \frac{dQ}{d\theta} \cdot d\theta = \int_{\vartheta_0}^{\vartheta_1} \left( \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta} \right) \mathrm{d}\vartheta.$$

For sake of clarity is should be mentioned that as a base unit of the cumulative heat release is J. This denotes the total heat release during the combustion cycle of the fuel. The computer control system 100 reads or otherwise obtains necessary information from the engine 10 to calculate the cumulative heat release $Q_{C1}$, $Q_{C2}$ ... $Q_{Cn}$ for each cylinder 12 of the engine 10. Pressure is measured from each cylinder 12 of the engine independently during combustion of fuel in the cylinder 12 at determined crank angles within a crank angle range ($\vartheta_1$ - $\vartheta_2$). The range represents the combustion phase in the cycle of the cylinder, thus the cumulative heat release is determined from combustion of fuel over the crank angle range ($\vartheta_1$ - $\vartheta_2$) during which combustion of fuel is taken place in one combustion cycle in one cylinder of the engine.

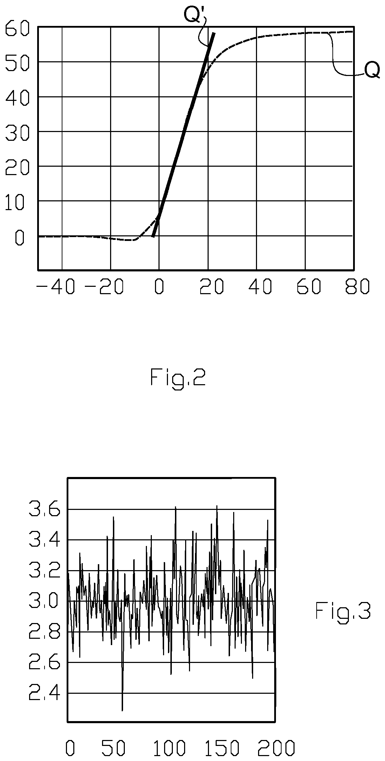

Next, a mean gross heat release rate of the combustion is determined from the cumulative heat release $Q_{C1}$, $Q_{C2}$ ... $Q_{Cn}$ outcome. That can be obtained e.g. by the Least Square Regression Line method. An example of the cumulative heat release Q during one combustion cycle in a cylinder of an internal combustion piston engine is shown in the figure 2 by a dotted line therein. The horizontal axis depicts crank angle position in degrees, where 0 degrees corresponds to the top dead center of the piston in the cylinder and the vertical axis the heat release in units of kJ. The solid line Q' depicts the estimated mean gross heat release rate of the combustion. In the method the slope of the Least Square Regression Line Q' is interpreted as the mean gross combustion rate, which in case of the figure 2 is approximately 2,2 kJ/degrees of crank angle.

The computer control system 100 comprises a number of first control units 106.1 -106.N dedicated for each cylinder of the engine. The first control units are configured to calculate the cumulative heat release $Q_{C1}$, $Q_{C2}$ ... $Q_{Cn}$ for each cylinder 12 of the engine 10 making use of the pressure measurements 26 and engine crank angle information 28. The computer control system 100 is configured to monitor and control the combustion during each of the combustion cycle taken place in the cylinder 12. According to an embodiment of the invention the first control unit 106.1 -106.N comprises computer program configured to determine the cumulative heat release using the equation

$$Q = \int_{\theta_1}^{\theta_2} \frac{dQ}{d\theta} \cdot d\theta = \int_{\vartheta_0}^{\vartheta_1} \left( \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta} \right) \mathrm{d}\vartheta.$$

The first control units 106.1 -106.N also are configured to calculate the mean gross heat release rate of the combustion phase in each cylinder by the Least Square Regression Line approximation as described above. The first control unit provides as its output the mean gross heat release rate of the cylinder. Figure 3 shows an exemplary trend graph of the mean gross heat release rate over 200 consecutive engine cycles. The mean gross heat release rate as feedback to control the combustion in the cylinder of the engine.

The computer control system 100 comprises second control units 104.1 - 104.n dedicated for each one of the cylinders 12 of the engine. The second control unit 104.1 - 104.n comprises advantageously a computer program which is configured to provide a control set value as an output for an actuator in the engine 10. As mentioned above, the inlet valves 14 of the engine 10 are provided with variable inlet valve closing system 18 by means of which the timing can be individually controlled. The output signal from the second control unit is made available to the inlet valve closing system 18, by means of which each one of the inlet valves 14 is individually controllable making use of cylinder-wise feedback. This way the mean gross heat release rate is used as feedback to control the combustion in the cylinder 12 of the engine 10 according to an embodiment of the invention.

During the engine 10 is running the steps described above, i.e: determining a cumulative heat release from combustion of fuel during successive combustion cycles in each cylinder of the engine, determining a mean gross heat release rate from combustion of fuel during successive combustion cycles in the cylinder of the engine, and using the mean gross heat release rate as feedback to control the combustion in the cylinder of the engine, are executed in connection with each one of the cylinders 12 of the engine providing individual cylinder specific mean gross heat release rate values of successive combustion cycles of each one of the cylinders of the engine and using the cylinder specific mean gross heat release rate values as feedback to control combustion in each respective cylinder in cylinder specific manner.

As is shown in the figure 1 the computer control system 100 comprises a third control unit 108. The third control unit 108 is configured to receive the cylinder specific mean gross heat release rate values Q' of successive combustion cycles of each one of the cylinders 12 of the engine. The third control unit 108 comprise a sub unit which receives the cylinder specific mean gross heat release rate values Q' of successive combustion cycles of each one of the cylinders 12 of the engine, and calculates an average value Q" of the mean gross heat release rate values Q'. The third control unit 108 is configured to provide as its output a set value for the waste gate 20.3 position control, the set value is the average Q" of the mean gross heat release rate values Q, and that is used as a collective feedback to control combustion in the engine 12 collectively. The computer control system 100 is configured to control the operation of the turbocharger 20, which is here for a sake of example implemented a controlling the waste gate 20.3 of the turbine section 20.1. The waste gate 20.3 effects on the operation of the turbocharger 20 in a manner known per se. This effects on combustion in all of the cylinder 12 of the engine 10 through controlling the charge pressure, which in turn effects on the amount of air (oxygen) admitted to a cylinder when the inlet valve 12 is open.

This way, in the embodiment shown in the figure 1 the method and the computer control system 100 is used for simultaneously controlling the air admission to each one of the cylinders independently from each other and controlling the air admission collectively to all to the cylinders.

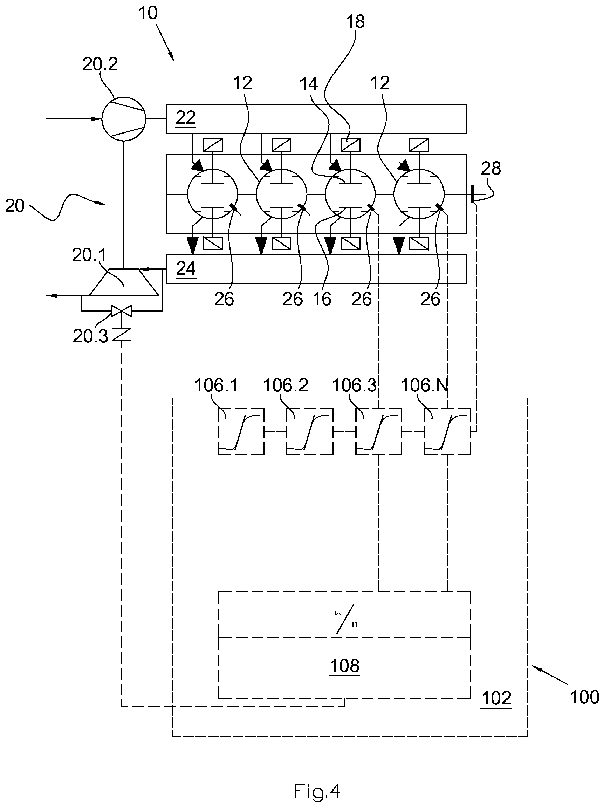

In the figure 4 there is shown another embodiment of the invention. There is shown an internal combustion multi-cylinder piston engine 10 and a computer control system 100 configured to control combustion process in the engine 10. Each one of the cylinders is provided with at least one inlet valve 14 and at least one exhaust valve 16, although typically there are more than one valve. The engine is provided with a supercharger, advantageously a turbocharger 20 which is configured to be of controllable output. The turbocharger is provided with a turbine part 20.1 and a compressor part 20.2 and a waste gate 20.3 in connection with the turbine part for controlling the operation of the turbocharger in a manner known as such. The turbocharger 20 may in addition to or alternatively be provided with an inlet vane control in the compressor part 20.2 or the compressor part 20.2 may be of variable geometry type to facilitate the control of the operation. The turbocharger is connected to an air receiver 22 of the engine 10 and to an exhaust gas manifold 24 of the engine 10. Each one of the cylinders 12 of the engine 10 is provided with a pressure sensor 26. The pressure sensors 26 are arranged to provide pressure measurement data to the computer control system 100. The engine is also provided with one or more crank angle sensors 28 or other suitable arrangement provide crank shaft position information for use in the computer control system 100. The computer control system 100 comprises a computer 102 and an executable computer program or programs configured, or programmed, to control the combustion of fuel in the engine 10 to carry out the method according to the invention.

In the embodiment of the figure 4 method of controlling combustion of fuel in a multi-cylinder internal combustion engine comprises at least the following steps. Firstly, determining a cumulative heat release from combustion of fuel during successive combustion cycles in each cylinder of the engine is practised as follows. Advantageously the cumulative heat release is determined based on pressure measurement 26 from cylinders of the engine 10 like in connection with embodiment shown in the figure 1. The heat release is determined based on the pressure and know dimensions of the cylinder and the position of the piston, which can be derived from the actual crank angle position 28.

Integrating the heat release rate equation (1) with respect to crank angle during which the combustion of fuel takes place in the cylinder, herein a range $\vartheta_0 \rightarrow \vartheta_1$, one obtains a cumulative heat release Q, similarly to that described in connection with the figure 1.

Next a mean gross heat release rate of the combustion is determined from the cumulative heat release $Q_{C1}$, $Q_{C2}$ ... $Q_{Cn}$ outcome. That can be obtained e.g. by the Least Square Regression Line method. The computer control system 100 comprises first control units 106.1 -106.N dedicated for each cylinder of the engine which are configured to calculate the cumulative heat release $Q_{C1}$, $Q_{C2}$ ... $Q_{Cn}$ for each cylinder 12 of the engine 10 making use of the pressure measurements 26 and engine crank angle information 28. The first control unit 106.1 -106.N comprises computer program configured to determine the cumulative heat release using the equation

$$(1) \qquad Q = \int_{\theta_1}^{\theta_2} \frac{dQ}{d\theta} \cdot d\theta = \int_{\vartheta 0}^{\vartheta 1} \left( \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta} \right) \mathrm{d}\vartheta \ .$$

The first control units 106.1 -106.N also are configured to calculate the mean gross heat release rate values of the combustion phase by the Least Square Regression Line approximation as described above. Each one of the first control unit 106.1 -106.N provides as its output the mean gross combustion rate values of the cylinder. The mean gross heat release rate value is used as input value for the third control unit 108. The third control unit 108 is configured to receive the cylinder specific mean gross heat release values Q' of successive combustion cycles of each one of the cylinders 12 of the engine. The third control unit 108 comprise a sub unit which receives the cylinder specific mean gross heat release rate values Q' of successive combustion cycles of each one of the cylinders 12 of the engine, and calculates an average value of the mean gross heat release rate values Q". The third control unit 108 is configured to provide as its output a set value for the waste gate 20.3 position control, and to use The set value is the average Q" of the mean gross heat release rate values Q', i.e. that is used gross value as a collective feedback to control combustion in the engine 12 collectively The computer control system 100 is configured to control the operation of the turbocharger 20, which is here for a sake of example implemented a controlling the waste gate 20.3 of the turbine section 20.1. The waste gate 20.3 effects on the operation of the turbocharger 20 in a manner known per se. This effects on combustion in all of the cylinder 12 of the engine 10 through controlling the charge pressure, which in turn effects on the amount of air (oxygen) admitted to a cylinder when the inlet valve 12 is open..

This way, in the embodiment shown in the figure 4 the method and the computer control system 100 is used for controlling the air admission collectively to all to the cylinders by controlling the charge pressure.

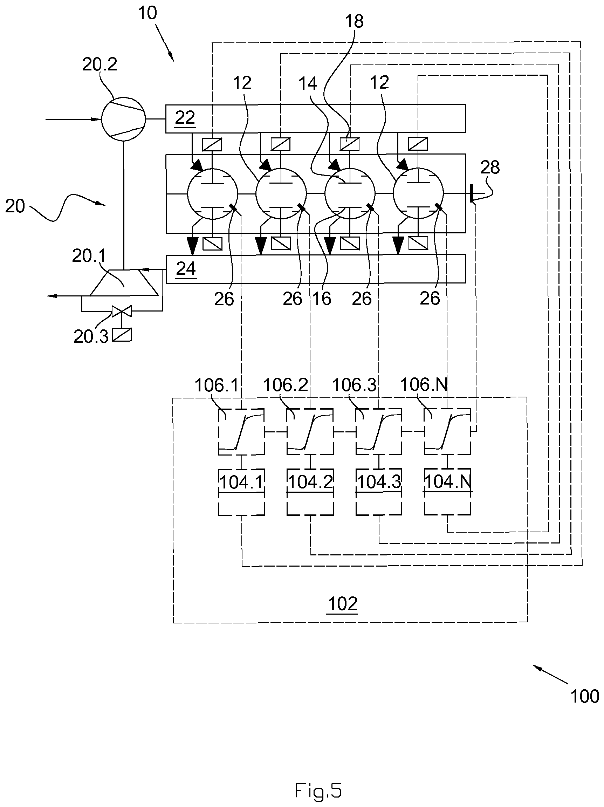

In the Figure 5 there is shown an internal combustion multi-cylinder piston engine 10 and a computer control system 100 according to another embodiment of the invention. Also here the internal combustion multi-cylinder piston engine 10 will be referred to as an engine 10. Each one of the cylinders is provided with at least one inlet valve 14 and at least one exhaust valve 16, although typically there are more than one valve. The valves are provided with so called valve lifting systems by means of which the valves may be opened and closed synchronized with the position of the pistons in the engine. At least the inlet valves 14 of the engine 10 are provided with variable inlet valve closing system 18 by means of which the timing (in respect to the crank angle of the engine) of closing, or generally duration of open time, of each one of the inlet valves 14 can be individually controlled. This way e.g. the closing timing of the valve can be either advanced or retarded individually and separately during each cycle.

The engine is provided with a supercharger, advantageously a turbocharger 20 which may be configured to be of controllable output. The turbocharger is provided with a turbine part 20.1 and a compressor part 20.2 and a waste gate 20.3 in connection with the turbine part for controlling the operation of the turbocharger in a manner known as such. The turbocharger 20 may in addition to or alternatively be provided with an inlet vane control in the compressor part 20.2 or the compressor part 20.2 may be of variable geometry type to facilitate the control of the operation. The turbocharger is connected to an air receiver 22 of the engine 10 and to an exhaust gas manifold 24 of the engine 10. Each one of the cylinders 12 of the engine 10 is provided with a pressure sensor 26. The pressure sensors 26 are arranged to provide pressure measurement data to the computer control system 100. The engine is also provided with one or more crank angle sensors 28 or other suitable arrangement provide crank shaft position information for use in the computer control system 100. The computer control system 100 comprises a computer 102 and an executable computer program or programs configured to control the combustion of fuel in the engine 10 to carry out the method according to the invention.

In the embodiment of the figure 5 method of controlling combustion of fuel in a multi-cylinder internal combustion engine comprises at least the following steps. Firstly, determining a cumulative heat release from combustion of fuel during successive combustion cycles in each cylinder of the engine is practised as follows. Advantageously the cumulative heat release is determined based on pressure measurement 26 from cylinders of the engine 10 in a similar manner and using similar means as is described in connection with the embodiments shown in the figures 1 and 4. Next a mean gross heat release rate value of the combustion is determined from the cumulative heat release $Q_{C1}$, $Q_{C2}$ ... $Q_{Cn}$ outcome. That can be obtained in a similar manner and using similar means as is described in connection with the embodiments shown in the figures 1 and 4.

The computer control system 100 comprises first control units 106.1 - 106.N dedicated for each cylinder of the engine which are configured to calculate the cumulative heat release $Q_{C1}$, $Q_{C2}$ ... $Q_{Cn}$ for each cylinder 12 of the engine 10 making use of the pressure measurements 26 and engine crank angle information 28. According to an embodiment of the invention the first control unit 106.1 -106.N comprises computer program configured to determine the cumulative heat release using the equation

$$Q = \int_{\theta_1}^{\theta_2} \frac{dQ}{d\theta} \cdot d\theta = \int_{\vartheta 0}^{\vartheta 1} \left( \frac{\gamma}{\gamma-1} \cdot p \cdot \frac{dV}{d\vartheta} + \frac{1}{\gamma-1} \cdot V \cdot \frac{dp}{d\vartheta} \right) d\vartheta .$$

The first control units 106.1 -106.N also are configured to calculate the mean gross heat release rate values of the combustion phase by the Least Square Regression Line approximation as described above. The first control unit provides as its output the gross combustion rate values of the cylinder it is configured to monitor and control during each of the combustion cycle taken place in the cylinder 12. The computer control system 100 comprises a second control units 104.1 - 104.n dedicated for each one of the cylinders 12 of the engine. The second control unit 104.1 - 104.n comprises advantageously a computer program which is configured to provide a control set value as an output for an actuator in the engine 10. As mentioned above, the inlet valves 14 of the engine 10 are provided with variable inlet valve closing system 18 by means of which the timing can be individually controlled. The output signal from the second control unit is made available to the inlet valve closing system 18, by means of which each one of the inlet valves 14 is individually controllable making use of cylinder-wise feedback. This way the mean gross heat release rate value is used as feedback to control the combustion in the cylinder 12 of the engine 10 according to an embodiment of the invention.

In the embodiment shown in the figure 5 the method and the computer control system 100 is used for simultaneously controlling the air admission to each one of the cylinders independently from each other.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A method of controlling combustion of fuel in a multi-cylinder internal combustion engine (10), comprising

   - determining a cumulative heat release (Q) from combustion of fuel over the crank angle range ($\vartheta_1$ - $\vartheta_2$) during which combustion of fuel is taken place in one combustion cycle in each one of the cylinders (12) of the engine (10), during successive combustion cycles in a cylinder of the engine (10), **characterized by**
   - determining a mean gross heat release rate (Q') from combustion of fuel by providing a Least Square Regression Line to the cumulative heat release (Q) and defining a slope of the Least Square Regression Line which stands for the mean gross heat release rate (Q'), during successive combustion cycles in the cylinder of the engine,
   - providing cylinder specific mean gross heat release values of successive combustion cycles in each one of the cylinders (12) of the engine (10) and calculating an average value of the cylinder specific mean gross heat release values, and using the average value as a feedback to control the amount of air involved in the combustion process in all of the cylinders (12) of the engine (12).

2. The method of controlling combustion in a multi-cylinder internal combustion engine according to claim 1, **characterized in that** the cumulative heat release (Q) is determined by using an equation

$$Q = \int_{\theta_1}^{\theta_2} \frac{dQ}{d\theta} \cdot d\theta = \int_{\vartheta 0}^{\vartheta 1} \left( \frac{\gamma}{\gamma - 1} \cdot p \cdot \frac{dV}{d\vartheta} + \frac{1}{\gamma - 1} \cdot V \cdot \frac{dp}{d\vartheta} \right) d\vartheta$$

3. The method of controlling combustion in a multi-cylinder internal combustion engine according to claim 1, **characterized by** practising the steps of the claim 1 in each one of the cylinders (12) of the engine (10) providing cylinder specific mean gross heat release rate values of successive combustion cycles of each one of the cylinders of the engine, and using the cylinder specific mean gross heat release rate values as feedback to control the amount of air involved in the combustion process in each respective cylinder in cylinder specific manner.

4. A method of controlling combustion in a multi-cylinder internal combustion engine according to claim 3, **characterized by** controlling the operation of an inlet valve (14) in each respective cylinder.

5. A method of controlling combustion in a multi-cylinder internal combustion engine according to claim 1, **characterized by** controlling the operation of supercharger (20) of the engine.

6. A method of controlling combustion in a multi-cylinder internal combustion engine according to claim 1, **characterized by** practising the steps of the claim 1 in each one of the cylinders (12) of the engine (10) providing cylinder specific mean gross heat release rate values of successive combustion cycles of each one of the cylinders of the engine, and using the cylinder specific mean gross heat release rate values as feedback to control the amount of air involved in the combustion process combustion in each respective cylinder in cylinder specific manner and by controlling the operation of an inlet valve (14) in each respective cylinder and by controlling the operation of supercharger (20) of the engine.

7. A computer control system configured to control combustion process in a multi-cylinder internal combustion piston engine comprising:

- A number first control units (106.1 -106.N) dedicated for each cylinder of the engine, which are configured to calculate a cumulative heat release ($Q_{C1}$, $Q_{C2}$ ... $Q_{Cn}$) for each cylinder (12) of the engine (10) based on cylinder pressure measurements (26) and engine crank angle information (28), each one of the first control unit (106.1 -106.N) comprises a computer program configured to determine the cumulative heat release using the equation

$$Q = \int_{\theta_1}^{\theta_2} \frac{dQ}{d\theta} \cdot d\theta = \int_{\vartheta 0}^{\vartheta 1} \left( \frac{\gamma}{\gamma-1} \cdot p \cdot \frac{dV}{d\vartheta} + \frac{1}{\gamma-1} \cdot V \cdot \frac{dp}{d\vartheta} \right) d\vartheta \, ,$$

and
- a computer program configured to calculate the mean gross heat release rate of the combustion phase by providing a Least Square Regression Line and defining a slope of the Least Square Regression Line which stands for the mean gross heat release rate (Q'), and
- the computer control system further comprises a third control unit (108), which third control unit (108) is configured to receive the cylinder specific mean gross heat release rate values (Q') of successive combustion cycles of each one of the cylinders (12) of the engine (10), and to calculate an average value gross heat release value (Q") and to provide as its output a set value for controlling the operation of supercharger (20) of the engine.

8. A computer control system according to claim 7, **characterized in that** the computer control system further comprises a number of second control units (104.1 - 104.n) dedicated for each one of the cylinders (12) of the engine which second control units (104.1 - 104.n) comprise a computer program which is configured to provide a control set value as an output for an actuator variable inlet valve closing system (18) of the engine.

9. A computer control system according to claim 7, **characterized in that** the computer control system further comprises a third control unit (108), which third control unit (108) is configured to receive the cylinder specific mean gross heat release rate values (Q') of successive combustion cycles of each one of the cylinders (12) of the engine (10), and to calculate an average value gross heat release value (Q") and to provide as its output a set value for the waste gate (20.3) position control.

## Patentansprüche

1. Verfahren zur Steuerung von Kraftstoffverbrennung in einem Mehrzylinder-Verbrennungsmotor (10), das umfasst

- Bestimmen einer kumulativen Wärmeabgabe (Q) von Kraftstoffverbrennung über den Kurbelwinkelbereich ($\vartheta 1$ - $\vartheta 2$) während Kraftstoffverbrennung in einem Verbrennungszyklus in jedem der Zylinder (12) des Motors (10) stattfindet, während aufeinanderfolgender Verbrennungszyklen in einem Zylinder des Motors (10), **gekennzeichnet durch**

- Bestimmen einer mittleren Gesamtwärmefreisetzungsrate (Q') von der Kraftstoffverbrennung durch Bereitstellen einer geringsten quadratischen Regressionslinie zu der kumulativen Wärmefreisetzung (Q) und Definieren eines Gefälles der geringsten quadratischen Regressionslinie, das die mittlere Gesamtwärmefreisetzungsrate (Q') während aufeinanderfolgender Verbrennungszyklen in dem Zylinder des Motors darstellt,
- Bereitstellen zylinderspezifischer mittlerer Gesamtwärmefreisetzungswerte aufeinanderfolgender Verbrennungszyklen in jedem der Zylinder (12) des Motors (10) und Berechnen eines mittleren Werts der zylinderspezifischen mittleren Gesamtwärmefreisetzungswerte, und Verwenden des mittleren Werts als ein Feedback zur Steuerung der Luftmenge, die in dem Verbrennungsprozess in allen der Zylinder (12) des Motors (12) involviert ist.

2. Verfahren zur Steuerung der Verbrennung in einem Mehrzylinder-Verbrennungsmotor nach Anspruch 1, **dadurch gekennzeichnet, dass** die kumulative Wärmefreisetzung (Q) bestimmt wird durch Verwendung einer Gleichung

$$Q = \int_{\theta_1}^{\theta_2} \frac{dQ}{d\theta} \cdot d\theta = \int_{\theta_0}^{\theta_1} \left( \frac{\gamma}{\gamma - 1} \cdot p \cdot \frac{dV}{d\vartheta} + \frac{1}{\gamma - 1} \cdot V \cdot \frac{dp}{d\vartheta} \right) d\vartheta$$

3. Verfahren zur Steuerung der Verbrennung in einem Mehrzylinder-Verbrennungsmotor nach Anspruch 1, **gekennzeichnet durch** Ausführen der Schritte des Anspruchs 1 in jedem der Zylinder (12) des Motors (10), die die zylinderspezifischen mittleren Gesamtwärmefreisetzungsratenwerte der aufeinanderfolgenden Verbrennungszyklen jedes der Zylinder des Motors bereitstellen, und Verwenden der zylinderspezifischen Gesamtwärmefreisetzungsratenwerte als Feedback zur Steuerung der Luftmenge, die an dem Verbrennungsprozess in jedem jeweiligen Zylinder auf zylinderspezifische Art involviert ist.

4. Verfahren zur Steuerung von Verbrennung in einem Mehrzylinder-Verbrennungsmotor nach Anspruch 3, **gekennzeichnet durch** Steuerung des Betriebs eines Einlassventils (14) in jedem jeweiligen Zylinder.

5. Verfahren zur Steuerung von Verbrennung in einem Mehrzylinder-Verbrennungsmotor nach Anspruch 1, **gekennzeichnet durch** Steuerung des Betriebs eines Kompressors (20) des Motors.

6. Verfahren zur Steuerung der Verbrennung in einem Mehrzylinder-Verbrennungsmotor nach Anspruch 1, **gekennzeichnet durch** Ausführen der Schritte des Anspruchs 1 in jedem der Zylinder (12) des Motors (10), die die zylinderspezifischen mittleren Gesamtwärmefreisetzungsratenwerte der aufeinanderfolgenden Verbrennungszyklen jedes der Zylinder des Motors bereitstellen, und Verwenden der zylinderspezifischen Gesamtwärmefreisetzungsratenwerte als Feedback zur Steuerung der Luftmenge, die in dem Verbrennungsprozess in jedem jeweiligen Zylinder auf zylinderspezifische Art involviert ist und durch Steuerung des Betriebs eines Einlassventils (14) in jedem jeweiligen Zylinder und durch Steuerung des Betriebs des Kompressors (20) des Motors.

7. Rechnersteuersystem, das konfiguriert ist, um den Verbrennungsprozess in einem Mehrzylinder-Verbrennungsmotor zu steuern, das umfasst:

- Eine Anzahl erster Steuereinheiten (106.1 bis 106.N), die jedem Zylinder des Motors gewidmet sind, die konfiguriert sind, um eine kumulative Wärmefreisetzung ($Q_{C1}$, $Q_{C2}$, ... $Q_{Cn}$) für jeden Zylinder (12) des Motors (10) basierend auf Zylinderdruckmessungen (26) und Motorkurbelwinkelinformationen (28) zu berechnen, wobei jede der ersten Steuereinheit (106.1 bis 106.N) ein Rechnerprogramm umfasst, das konfiguriert ist, um die kumulative Wärmefreisetzung zu bestimmen, unter Verwenden der Gleichung

$$Q = \int_{\theta_1}^{\theta_2} \frac{dQ}{d\theta} \cdot d\theta = \int_{\theta_0}^{\theta_1} \left( \frac{\gamma}{\gamma - 1} \cdot p \cdot \frac{dV}{d\vartheta} + \frac{1}{\gamma - 1} \cdot V \cdot \frac{dp}{d\vartheta} \right) d\vartheta \, ,$$

- ein Rechnerprogramm, das konfiguriert ist, um die mittlere Gesamtwärmefreisetzungsrate der Verbrennungsphase durch Bereitstellen einer geringsten quadratischen Regressionslinie zu berechnen und ein Gefälle der geringsten quadratischen Regressionslinie zu definieren, das die mittlere Gesamtwärmefreisetzungsrate (Q') darstellt, und
- das Rechnersteuersystem weiter eine dritte Steuereinheit (108) umfasst, wobei die dritte Steuereinheit (108) konfiguriert ist, um die zylinderspezifischen mittleren Gesamtwärmefreisetzungsratenwerte (Q') aufeinanderfolgender Verbrennungszyklen jedes der Zylinder (12) des Motors (10) zu empfangen und einen mittleren Wert des Gesamtwärmefreisetzungswerts (Q'') zu berechnen und als ihre Ausgabe einen Sollwert zur Steuerung des Betriebs des Kompressors (20) des Motors bereitzustellen.

8. Rechnersteuersystem nach Anspruch 7, **gekennzeichnet dadurch, dass** das Rechnersteuersystem weiter eine Anzahl zweiter Steuereinheiten (104.1 bis 104.n) umfasst, die jedem der Zylinder (12) des Motors gewidmet sind, wobei die zweiten Steuereinheiten (104.1 bis 104.n) ein Rechnerprogramm umfassen, das konfiguriert ist, um einen Steuersollwert als eine Ausgabe für ein durch Aktuator variables Einlassventil-Schließsystem (18) des Motors bereitzustellen.

9. Rechnersteuersystem nach Anspruch 7, **dadurch gekennzeichnet, dass** das Rechnersteuerungssystem weiter eine dritte Steuereinheit (108) umfasst, wobei die dritte Steuereinheit (108) konfiguriert ist, um die zylinderspezifischen mittleren Gesamtwärmefreisetzungsratenwerte (Q') aufeinanderfolgender Verbrennungszyklen jedes der Zylinder (12) des Motors (10) zu empfangen und einen mittleren Wert des Gesamtwärmefreisetzungswerts (Q'') zu berechnen und als ihre Ausgabe einen Sollwert zur Positionssteuerung des Ladedruckregelventils (20.3) bereitzustellen.

**Revendications**

1. Procédé de commande de la combustion de carburant dans un moteur à combustion interne multicylindres (10), comprenant de :

   - déterminer un dégagement de chaleur cumulatif (Q) d'après la combustion de carburant sur la plage d'angle de vilebrequin (ϑ1-ϑ2) pendant lequel la combustion du carburant a eu lieu en un cycle de combustion dans chacun des cylindres (12) du moteur (10), pendant des cycles de combustion successifs dans un cylindre du moteur (10), **caractérisé par**
   - déterminer un taux de dégagement de chaleur brut moyen (Q') d'après la combustion de carburant en fournissant une courbe de régression des moindres carrés au dégagement de chaleur cumulatif (Q) et définir une pente de la courbe de régression des moindres carrés qui représente le taux de dégagement de chaleur brut moyen (Q'), pendant des cycles de combustion successifs dans le cylindre du moteur,
   - fournir des valeurs de dégagement de chaleur brutes moyennes spécifiques au cylindre des cycles de combustion successifs dans chacun des cylindres (12) du moteur (10) et calculer une valeur moyenne des valeurs de dégagement de chaleur brutes moyennes spécifiques au cylindre, et utiliser la valeur moyenne comme un retour d'information pour réguler la quantité d'air impliquée dans le processus de combustion dans tous les cylindres (12) du moteur (12).

2. Procédé de commande de la combustion de carburant dans un moteur à combustion interne multicylindres selon la revendication 1, **caractérisé en ce que** le dégagement de chaleur cumulatif (Q) est déterminé en utilisant une équation :

$$Q = \int_{\theta_1}^{\theta_2} \frac{dQ}{d\theta} \cdot d\theta = \int_{\vartheta0}^{\vartheta1} \left( \frac{\gamma}{\gamma - 1} \cdot p \cdot \frac{dV}{d\vartheta} + \frac{1}{\gamma - 1} \cdot V \cdot \frac{dp}{d\vartheta} \right) d\vartheta$$

3. Procédé de commande de la combustion de carburant dans un moteur à combustion interne multicylindres selon la revendication 1, **caractérisé par** la mise en œuvre des étapes de la revendication 1 dans chacun des cylindres (12) du moteur (10) fournissant des valeurs de taux de dégagement brutes moyennes spécifiques au cylindre des cycles de combustion successifs de chacun des cylindres du moteur, et l'utilisation des valeurs de taux de dégagement brutes moyennes spécifiques au cylindre comme retour d'information pour réguler la quantité d'air impliquée dans le processus de combustion de chaque cylindre respectif d'une manière spécifique au cylindre.

4. Procédé de commande de la combustion de carburant dans un moteur à combustion interne multicylindres selon la revendication 3, **caractérisé par** la commande du fonctionnement d'une soupape d'amission (14) dans chaque cylindre respectif.

5. Procédé de commande de la combustion de carburant dans un moteur à combustion interne multicylindres selon la revendication 1, **caractérisé par** la commande du fonctionnement d'un surcompresseur (20) du moteur.

**6.** Procédé de commande de la combustion de carburant dans un moteur à combustion interne multicylindres selon la revendication 1, **caractérisé par** la mise en œuvre des étapes de la revendication 1 dans chacun des cylindres (12) du moteur (10) fournissant des valeurs de dégagement de chaleur brutes moyennes spécifiques au cylindre de cycles de combustion successifs de chacun des cylindres du moteur, et l'utilisation des valeurs de taux de dégagement de chaleur brutes moyennes spécifiques au cylindre comme retour d'information pour réguler la quantité d'air impliquée dans le processus de combustion dans chaque cylindre respectif d'une manière spécifique au cylindre et en commandant le fonctionnement d'une soupape d'admission (14) dans chaque cylindre respectif et en commandant le fonctionnement d'un surcompresseur (20) du moteur.

**7.** Système de commande informatisé configuré pour commander le processus de combustion dans un moteur à piston à combustion interne multicylindres, comprenant :

- un nombre de premières unités de commande (106.1-106.N) dédiées à chaque cylindre du moteur, qui sont configurées pour calculer un dégagement de chaleur cumulatif ($Q_{c1}$, $Q_{c2}$...$Q_{cn}$) pour chaque cylindre (12) du moteur (10) sur la base de mesures de pression de cylindre (26) et d'une information d'angle de vilebrequin du moteur (28), chacune de la première unité de commande (106.1-106.N) comprend un programme informatique configuré pour déterminer le dégagement de chaleur cumulatif en utilisant l'équation :

$$Q = \int_{\theta_1}^{\theta_2} \frac{dQ}{d\theta} \cdot d\theta = \int_{\vartheta_0}^{\vartheta_1} \left( \frac{\gamma}{\gamma - 1} \cdot p \cdot \frac{dV}{d\vartheta} + \frac{1}{\gamma - 1} \cdot V \cdot \frac{dp}{d\vartheta} \right) d\vartheta$$

,

et
- un programme informatique configuré pour calcule le taux de dégagement de chaleur brut moyen de la phase de combustion en fournissant une courbe de régression des moindres carrés et en définissant une pente de la courbe de régression des moindres carrés qui représente le taux de dégagement de chaleur brut moyen (Q'), et
- le système de commande informatisé comprend en outre une troisième unité de commande (108), laquelle troisième unité de commande (108) est configurée pour recevoir les valeurs de taux de dégagement de chaleur brutes moyennes spécifiques au cylindre (Q') des cycles de combustion successifs de chacun des cylindres (12) du moteur (10), et calculer une valeur de dégagement de chaleur brute moyenne (Q") et fournir en tant que sortie une valeur de réglage pour commander le fonctionnement du surcompresseur (20) du moteur.

**8.** Système de commande informatisé selon la revendication 7, **caractérisé en ce que** le système de commande informatisé comprend en outre un nombre de deuxièmes unités de commande (104.1-104.n) dédiées à chacun des cylindres (12) du moteur, lesquelles deuxièmes unités de commande (104.1-104.n) comprennent un programme informatique qui est configuré pour fournir une valeur de réglage de commande en tant que sortie pour un système de fermeture de soupape d'entrée à actionneur variable (18) du moteur.

**9.** Système de commande informatisé selon la revendication 7, **caractérisé en ce que** le système de commande informatique comprend en outre une troisième unité de commande (108), laquelle troisième unité de commande (108) est configurée pour recevoir les valeurs de taux de dégagement de chaleur brutes moyennes spécifiques au cylindre (Q') des cycles de combustion successifs de chacun des cylindres (12) du moteur (10), et calculer une valeur de dégagement de chaleur brute moyenne (Q") et fournir en tant que sortie une valeur de réglage pour commander la position de la soupape de décharge (20.3).

Fig.1

Fig.2

Fig.3

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016087700 A
- WO 2017032915 A
- WO 2014155170 A1
- US 6843231 B1
- JP S6229748 A